# EUROPÄISCHE PATENTSCHRIFT

(11) **EP 2 962 003 B1**
(45) Veröffentlichungstag und Bekanntmachung des Hinweises auf die Patenterteilung: **14.03.2018**
(21) Anmeldenummer: 14786660.2
(22) Anmeldetag: 17.10.2014
(51) Int. Cl.: F16C 7/02, F16C 11/06, F16C 11/08, F16F 1/376

(54) **VORRICHTUNG ZUM LÖSBAREN ANBINDEN EINES BETÄTIGUNGSGLIEDES AN EINEN GEBER ODER NEHMER**
DEVICE FOR DETACHABLY FASTENING AN ACTUATING ELEMENT TO A TRANSMITTER OR RECEIVER
DISPOSITIF POUR L'ATTACHEMENT DÉTACHABLE D'UN ÉLÉMENT D'ACTIONNEMENT À UN TRANSMETTEUR OÙ RÉCEPTEUR

(30) Priorität: 23.10.2013 DE 202013104768 U
(43) Veröffentlichungstag der Anmeldung: 06.01.2016
(73) Patentinhaber: Küster Holding GmbH, 35630 Ehringshausen (DE)
(72) Erfinder: HENRICH, Willi, 35630 Ehringshausen (DE); KREMER, Viktor, 35444 Biebertal (DE)
(74) Vertreter: Müller, Eckhard
(86) Internationale Anmeldenummer: PCT/EP2014/072345
(87) Internationale Veröffentlichungsnummer: WO 2015/059056

(56) Entgegenhaltungen:
- DE-A1- 19 755 284
- US-A- 2 710 208
- US-A- 3 350 042
- US-A- 3 780 596
- US-A- 5 265 495

## Beschreibung

Die vorliegende Erfindung betrifft eine Vorrichtung zum lösbaren Anbinden eines Betätigungsgliedes an einen Geber oder Nehmer, beispielsweise an einen Schalthebel oder ein Getriebe eines Kraftfahrzeuges, mit einer Anbindungsstelle zum Festlegen des Betätigungsgliedes und einer Aufnahme zum Festlegen eines Anbindungselementes des Gebers oder Nehmers, wobei die Aufnahme ein im Wesentlichen ösenartiges äußeres Aufnahmeelement sowie ein darin angeordnetes inneres Aufnahmeelement aufweist, zwischen denen ein elastisches Dämpfungselement angeordnet ist.
Die Erfindung betrifft ferner ein Betätigungsglied mit einer derartigen Anbindevorrichtung.
Anbindevorrichtungen der eingangs genannten Art sind beispielsweise aus US 5 265 495 A1 und EP 2 278 178 B1 bekannt und werden u.a. im Automobilbereich eingesetzt, um ein Betätigungsglied, beispielsweise einen Betätigungszug oder eine Betätigungsstange, mit dessen Hilfe etwa bei einem Handschaltgetriebe die vom Fahrer durch Betätigung des Schalthebels vorgegebene Schaltbewegung auf den Wählhebel am Getriebegehäuse übertragen wird, jeweils endseitig an den Schalthebel und den Getriebewählhebel anzubinden. Dabei ist jeweils ein Ende des Betätigungsgliedes mit einer Anbindungsstelle der Anbindungsvorrichtung verbunden, welche wiederum eine Aufnahme aufweist, die an einem Anbindungselement des Nehmens oder Gebers, beispielsweise einem Betätigungszapfen des Getriebewählhebels oder einem Anbindungselement des Schalthebels, festgelegt ist. Das elastische Dämpfungselement in der Aufnahme, welches zwischen dem ösenartigen äußeren Aufnahmeelement und dem darin aufgenommenen inneren Aufnahmeelement angeordnet ist, dient dazu, die Übertragung von Vibrationen des Getriebes vom Getriebewählhebel auf das Betätigungsglied und im Weiteren vom Betätigungsglied auf den Schalthebel auszudämpfen, so dass im Ergebnis unerwünschte Vibrationen am Schalthebel bzw. im Innenraum des Fahrzeuges möglichst vermieden werden.

Weitere Anbindungsvorrichtungen der eingangs genannten Art sind auch aus der DE 197 55 284 A1 sowie EP 1 798 431 A1 bekannt.

Die DE 197 55 284 A1 offenbart ein Kugelgelenk mit einer auf einem Zapfen angeordneten Gelenkkugel, die abschnittsweise von einer Lagerschale umgeben ist, wobei die eine kalottenförmige Innenmantelfläche aufweisende Lagerschale mittels einer im wesentlichen zylindrische Außenmantelfläche in eine Aufnahmebohrung eines Gehäuses eingesetzt ist. Hierbei ist die Lagerschale an ihrer Außenmantelfläche in einer aus einem gummielastischen Elastomer hergestellten Hülse eingebettet, die in der Aufnahmebohrung anliegt. Die Anbindung des Betätigungsgliedes ist derart, dass von dem Gehäuse ein Hebel ausgeht, der an der Mantelfläche mit einem Außengewinde versehen ist, wobei an diesem Außengewinde ein nicht näher dargestellter Schalthebel des Kraftfahrzeuges fixiert werden kann.

Eine Anbindungsvorrichtung mit einer Aufnahme mit einem äußeren Aufnahmeelement und ein darin angeordnetes inneres Aufnahmeelement, zwischen denen ein elastisches Dämpfungselement angeordnet ist, offenbart auch die EP 1 798 431 A1. Bei dieser bekannten Anbindungsvorrichtung ist das Dämpfungselement zylindrisch ausgebildet. Die Anbindung zum Festlegen eines Bewegungsglieds erfolgt dabei durch Umspritzen.

Aus der DE 197 31 039 A1 geht eine Vorrichtung zur Anbindung eines Bowdenzuges an das Wechselgetriebe eines Kraftfahrzeuges hervor, wobei die Vorrichtung aus einem Bowdenzug besteht, dessen Endstück mit einer in der Vorrichtung festgelegten Aufnahmehülse verbunden ist und die Vorrichtung weiterhin ein Dämpfungselement aufweist, mit einem darin angeordneten Kunststoffkern, dessen Öffnung ein Getriebeanbindungselement aufnimmt. Auch bei dieser aus dem Stand der Technik bekannten Anbindungsvorrichtung erfolgt die Anbindung eines Anbindungsglieds an den Geber oder Nehmer durch Umspritzen.

Trotz eines derartigen Dämpfungselementes zeigen die aus dem Stand der Technik bekannten Anbindevorrichtungen - gemessen am heutigen Fahrkomfort von Kraftfahrzeugen - häufig noch unzureichende Vibrationsunterdrückungseigenschaften. Dies gilt auch gemessen am heutigen Geräuschkomfort.

Aufgabe der vorliegenden Erfindung ist es daher, eine Anbindevorrichtung sowie ein Betätigungsglied mit einer Anbindungsvorrichtung der eingangs genannten Art dahingehend zu verbessern, dass die Übertragung von unerwünschten Vibrationen vom Getriebe über das Betätigungsglied in den Innenraum des Fahrzeuges auf ein Minimum reduziert wird. Gleichzeitig soll die Anbindung des Betätigungsgliedes an die Anbindevorrichtung technisch vereinfacht werden.

Diese Aufgabe wird mit einer Vorrichtung gemäß Anspruch 1 sowie mit einem Betätigungsglied gemäß Anspruch 18 gelöst. Vorteilhafte Ausgestaltungen der Erfindung sind Gegenstand der Unteransprüche.

Die Vorrichtung zum lösbaren Anbinden eines Betätigungsgliedes an einen Geber oder Nehmer gemäß Obergriffs des Anspruchs 1 zeichnet sich dadurch aus, dass das Dämpfungselement als separates Bauteil ausgebildet ist und an seiner dem äußeren oder inneren Aufnahmeelement zugewandten Wandung ein periodisch und/oder alternierend ausgebildetes Wellenprofil und die Anbindungsstelle einen Gewindeeinsatz zum Festlegen des Betätigungsgliedes aufweist.

Erfindungsgemäß wurde erkannt, dass ein Dämpfungselement, welches zwischen dem inneren und dem äußeren Aufnahmeelement der Anbindevorrichtung angeordnet ist und eine wellenprofilartige Außenwandung, das heißt ein Wellenprofil, zum äußeren Aufnahmeelement hin aufweist, deutlich verbesserte Dämpfungseigenschaften besitzt, was die unerwünschte Übertragung von Vibrationen auf das Übertragungsglied betrifft. Grund hierfür ist u.a., dass durch das Profil, insbesondere Wellenprofil die Kontaktfläche des Dämpfungselementes zum äußeren Aufnahmeelement hin derart minimiert ist, dass die Übertragung von störenden Vibrationen in vorteilhafter Weise unterdrückt wird.

Auf Grund der Unterdrückung von störenden Vibrationen ist es möglich, die Anbindung des Betätigungsgliedes an die Anbindevorrichtung in erfindungsgemäßer Weise zu erleichtern, indem die Anbindestelle der Anbindevorrichtung einen Gewindeeinsatz aufweist, an dem in vorteilhafter Weise das Betätigungsglied mittels einer Schraube festgelegt werden kann. Im Vergleich zum Stand der Technik, bei dem das Betätigungsglied entweder direkt in die Anbindungsstelle eingespritzt wird, erlaubt ein Gewindeeinsatz eine kostengünstige, flexible und insbesondere wieder lösbare Anbindung des Betätigungsgliedes an die Anbindevorrichtung.

Gemäß einer ersten vorteilhaften Ausgestaltung der Erfindung ist das Profil auf der Außenwandung des Dämpfungselementes periodisch ausgebildet und/oder aus alternierend teilkreisförmigen, insbesondere halbkreisförmigen Fortsätzen und Vertiefungen gebildet. In Versuchen hat sich nämlich herausgestellt, dass durch ein derart ausgebildetes Wellenprofil die Dämpfungseigenschaften besonders effektiv verbessert werden.

Um das Zusammenfügen der Anbindeeinrichtung bzw. des Einfügung des Dämpfungselementes zwischen das äußere ösenartige Ausnahmeelement und das darin aufgenommene innere Aufnahmeelement zu erleichtern, ist wenigstens eine der Umrandungen bzw. Kanten des Dämpfungselementes bei einer weiteren vorteilhaften Ausgestaltung der Erfindung abgefasst, insbesondere abgekantet oder abgerundet.

Für eine automatisierte Montage der Anbindeeinrichtung ist es vorteilhaft, wenn das Dämpfungselement als zylindrisches, ringförmiges Bauteil ausgebildet ist.

Eine besonders kostengünstige und stabile Anbindevorrichtung wird dadurch erreicht, dass das äußere Aufnahmeelement und die Anbindungsstelle einstückig, insbesondere als ein gemeinsamer Grundkörper, ausgebildet sind.

Um einen Ausgleich von Winkelbewegungen zwischen dem Betätigungsglied und dem Anbindungselement des Gebers oder Nehmers zu gewährleisten, ist es nach einer weiteren vorteilhaften Ausgestaltung der Erfindung vorgesehen, dass das äußere Aufnahmeelement, das innere Aufnahmeelement und/oder das Dämpfungselement im Wesentlichen ringförmig und/oder hohlzylinderförmig ausgebildet sind. Hierdurch wird insbesondere eine Rotationsbewegung der Anbindevorrichtung bzw. des Betätigungsgliedes relativ zum Anbindungselement des Gebers oder Nehmers um die Längs- bzw. Rotationsachse des ösenartigen äußeren Aufnahmeelementes ermöglicht.

Eine besonders leichte und insbesondere wieder lösbare Verbindung zwischen Anbindungseinrichtung und Anbindungselement wird dadurch erreicht, dass gemäß einer weiteren vorteilhaften Ausgestaltung der Erfindung das innere Aufnahmeelement eine Buchse aufweist, in der das Anbindungselement des Gebers oder Nehmers, insbesondere mittels einer Rast- und/oder Knipsverbindung, festlegbar ist.

Um die Rotationsbewegungsfreiheitsgrade der Anbindevorrichtung bzw. des Betätigungsgliedes relativ zum Anbindungselement des Gebers und/oder Nehmers auf drei Achsen zu erweitern, kann es in vorteilhafter Weise vorgesehen sein, dass die Buchse als Gelenkpfanne eines Kugelgelenks ausgebildet ist, in der ein einen Kugelkopf aufweisendes Anbindungselementes des Gebers oder Nehmers festlegbar, insbesondere einrastbar oder einklipsbar ist.

Darüber hinaus kann es vorgesehen sein, dass das innere Aufnahmeelement eine vorzugsweise zylinderförmige Hülse aufweist, in der die Buchse angeordnet ist. Ein derartiger zweiteiliger Aufbau aus Hülse und darin aufgenommener Buchse erlaubt es, das innere Aufnahmeelement einerseits mittels der Buchse an die Form des Anbindungselementes und andererseits über die Hülse an die Form des äußeren Aufnahmeelementes anzupassen. Hierdurch wird die Anbindungsvorrichtung insgesamt flexibel an verschiedene Geber bzw. Nehmer adaptierbar.

Zur Festlegung der Buchse in Montagestellung in wenigstens einer axialen Richtung innerhalb der Hülse ist es nach einer weiteren vorteilhaften Ausgestaltung der Erfindung vorgesehen, dass die Hülse eine Durchgangsverjüngung aufweist, mittels derer die vorzugsweise sich korrespondierend verjüngende Buchse durch Formfluss in Eingriff steht.

Nach einer weiteren vorteilhaften Ausgestaltung der Erfindung ist es vorgesehen, dass das innere Aufnahmeelement in axialer Richtung bezüglich des ösenartigen äußeren Aufnahmeelementes jeweils endseitig ein Abschlusselement aufweist, mittels dessen das innere Aufnahmeelement, insbesondere die Hülse und/oder die Buchse, in axialer Richtung am äußeren Aufnahmeelement festgelegt ist.

Besonders bevorzug ist die Buchse und wenigstens eines der beiden Abschlusselemente einstückig, insbesondere als Hohlzylinder mit einem einenends umlaufendem Bund oder Flansch, ausgebildet.

Vorzugsweise sind die jeweiligen endseitigen Abschlusselemente derart ausgebildet, dass sie größere radiale Ausdehnung aufweisen als die Hülse oder die Buchse, so dass mittels Formfluss eine axiale Festlegung des inneren Aufnahmeelementes über das stirnseitig bzw. auf einer Flachseite am äußeren Aufnahmeelement anliegende Abschlusselement erreicht wird. Denkbar ist beispielsweise, dass wenigstens eines der beiden Abschlusselemente deckel- oder teller- oder lochscheibenartig ausgebildet ist. Die lochscheibenartige Ausbildung bietet sich insbesondere für jene Seite des inneren bzw. äußeren Aufnahmeelementes an, über die das Anbindungselement, insbesondere der Kugelgelenkkopf, in die Buchse eingeführt wird.

Zur Fixierung der Abschlusselemente an der Hülse ist nach einer weiteren vorteilhaften Ausgestaltung der Erfindung vorgesehen, dass wenigstens eines der beiden Abschlusselemente eine stirnseitig umlaufende Nut aufweist, in welche die Hülse in Montagestellung eingreift. Denkbar ist beispielsweise, dass die Hülse in die umlaufende Nut eingepresst, eingeklebt oder eingeklipst wird.

Gemäß einer weiteren vorteilhaften Ausgestaltung der Erfindung ist der Gewindeeinsatz als Mutter, insbesondere als Mehrkantmutter, ausgebildet. Hierbei kann insbesondere auf Standartbauelemente zurückgegriffen werden, was sich in vorteilhafter Weise auf die Herstellungskosten der Anbindungsvorrichtung auswirkt.

Um die Anbindung des Betätigungsgliedes an die Anbindungsstelle technisch weiter zu vereinfachen, insbesondere eine wohl definierte Anbindung zu gewährleisten, ist es nach einer weiteren vorteilhaften Ausgestaltung der Erfindung vorgesehen, dass die Anwendungsstelle eine Auflage und/oder eine Führung für das anzubindende Betätigungsglied, insbesondere für eine Anschlusslasche eines anzubindenden Betätigungsgliedes aufweist.

Ein unabhängiger Gedanke der Erfindung betrifft ein Betätigungsglied mit wenigstens einer einenends, vorzugsweise im Bereich einer Anschlusslasche, angeordneten Anbindungsvorrichtung der zuvor beschriebenen Art.

Nach einer weiteren vorteilhaften Ausgestaltung ist es vorgesehen, dass die Achse des Gewindeeinsatzes bzw. der Mutter orthogonal zur Achse der Aufnahme verläuft. Dadurch ergeben sich Vorteile bei der Montage und Einstellung der Vorrichtung in einem Kraftfahrzeug, da der Werkzeugangriff in einer im Wesentlichen horizontalen Ebene liegt.

Nach einer besonders vorteilhaften Ausgestaltung des Betätigungsgliedes ist es vorgesehen, dass wenigstens einenends, vorzugsweise im Bereich einer Anschlusslasche, ein Loch, insbesondere ein Langloch, vorgesehen ist, durch das zum Festlegen des Betätigungsgliedes an der Vorrichtung eine Schraube in den Gewindeeinsatz eindrehbar ist. Eine weitere vorteilhafte Ausgestaltung der Erfindung sieht vor, dass das Dämpfungselement als separat handhabbares Bauteil ausgebildet ist.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: eine Explosionsdarstellung eines möglichen Ausführungsbeispiels einer erfindungsgemäßen Vorrichtung zum lösbaren Anbinden eines Betätigungsgliedes an einem Geber oder Nehmer,
- Fig. 2: einen Längsschnitt durch die zusammengefügte Vorrichtung gemäß Fig. 1 und
- Fig. 3: eine Draufsicht auf das Dämpfungselement der Vorrichtung gemäß Fig. 1.
- Fig. 4: eine perspektivische Ansicht einer weiteren Ausführungsform des Dämpfungselements.

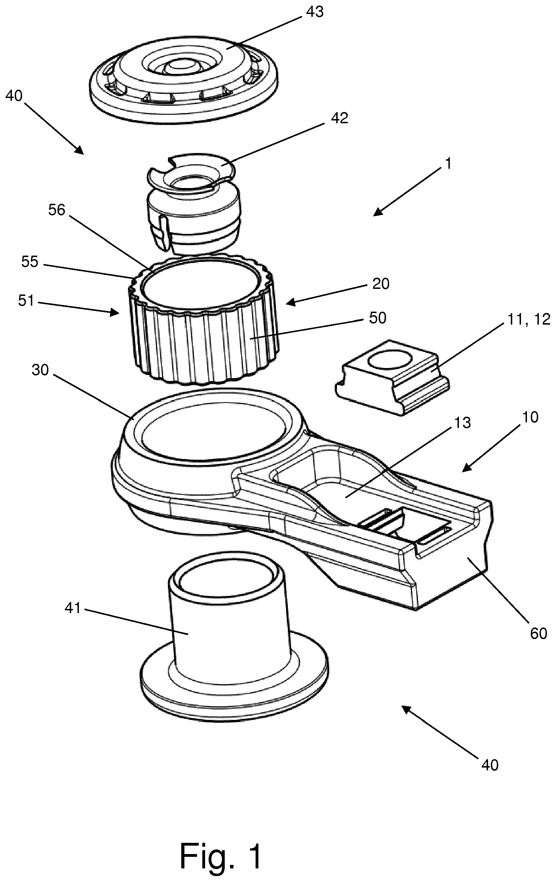

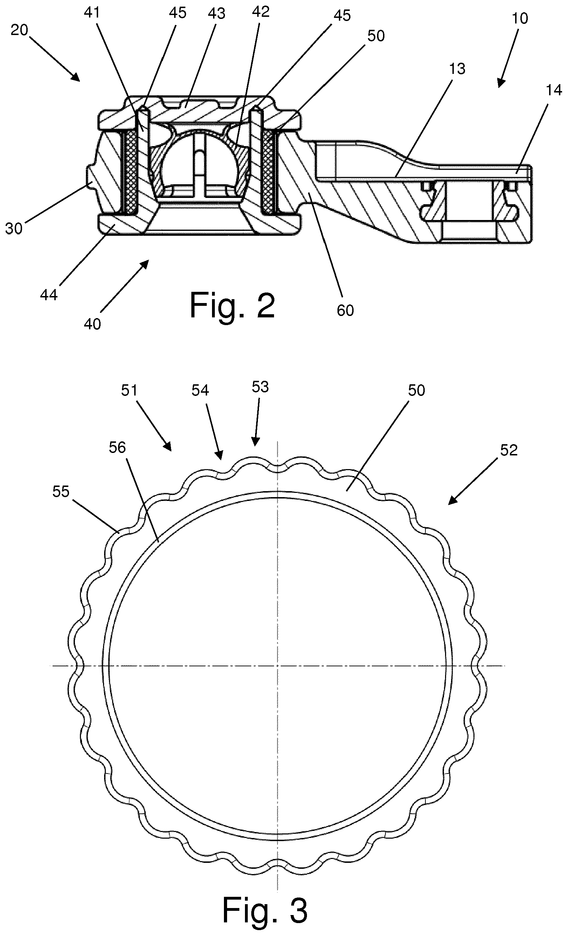

Die Fig. 1 und 2 zeigen ein mögliches Ausführungsbeispiel einer erfindungsgemäßen Vorrichtung 1 zum lösbaren Anbinden eines Betätigungsliedes an einen Geber oder Nehmer, beispielsweise an einen Schalthebel oder ein Getriebe eines Kraftfahrzeuges. Hierzu weist die Vorrichtung 1 eine Anbindungsstelle 10 zum Festlegen des Betätigungsgliedes und eine Aufnahme 20 zum Festlegen eines Anbindungselementes des Gebers oder Nehmers auf, wobei die Aufnahme 20 aus einem im Wesentlichen ösenartigen äußeren Aufnahmeelement 30 sowie einem darin angeordneten inneren Aufnahmeelement 40 besteht.

In vorteilhafter Weise sind bei dem in den Fig. 1 und 2 gezeigten Ausführungsbeispiel das äußere Aufnahmeelement 30 und die Anbindungsstelle 10 unter Bildung eines gemeinsamen Grundkörpers einstückig ausgebildet, wobei der Grundkörper eine im wesentliche längliche Form aufweist, an dessen einem Ende das ösenartige, in etwa ringförmige äußere Aufnahmeelement 30 und an dessen anderem Ende die Anbindungsstelle 10 zum Festlegen des Betätigungsgliedes angeordnet sind. Zwischen dem äußerem Aufnahmeelement 30 und dem inneren Aufnahmeelement 40 ist gemäß der Erfindung ein elastischen Dämpfungselement 50 angeordnet, das an seiner dem äußeren Aufnahmeelement 30 zugewandten Außenwandung 51 ein umlaufendes Wellenprofil 52 aufweist.

Wie den Fig. 1 und 2 außerdem zu entnehmen ist, besteht das innere Aufnahmeelement 40 insgesamt aus vier Bauteilen, nämlich einem deckelartigen Abschlusselement 43, einem lochscheibenartigen Abschlusselement 44, einer Hülse 41 sowie einer darin aufgenommenen Buchse 42.

Bei dem in den Fig. 1 und 2 gezeigten Ausführungsbeispiel ist die Buchse 42 als Gelenkpfanne eines Kugelgelenkes ausgebildet, in welche ein einen Kugelkopf aufweisendes Anbindungselement des Gebers oder Nehmers festlegbar ist. Im vorliegenden Ausführungsbeispiel weist die Gelenkpfanne insbesondere Rast- bzw. Klipsverbindungsmittel auf, mit deren Hilfe das Anbindungselement in besonders einfacher Weise und insbesondere wieder lösbar in dem innerem Aufnahmeelement 40, d.h. in der Buchse 42, festlegbar ist.

Desweiteren ist die Buchse 42 bei dem vorliegenden Ausführungsbeispiel in einer zylinderförmig ausgebildeten Hülse 41 aufgenommen, welche eine Durchgangsverjüngung 46 aufweist, mittels derer die sich korrespondierende verjüngende Buchse 42 in Montagestellung in einer axialen Richtung innerhalb der Hülse 41 festgelegt ist.

In entgegengesetzter axialer Richtung ist die Buchse 42 in Hülse 41 durch das tellerartige Abschlusselement 43 festgelegt, das stirnseitig eine umlaufende Nut 45 aufweist, in welche die Hülse 41 in Montagestellung eingreift. Das Abschlusselement 43 besitzt in radialer Richtung eine größere Ausdehnung als die Hülse 41 und gelangt mit dem überlappenden Bereich in Anlagestellung mit dem äußeren Aufnahmeelement 30, wodurch das innere Aufnahmeelement 40 gegenüber dem äußeren Aufnahmeelement 30 in einer axialen Richtung mittels Formschluss festgelegt ist.

Auf der gegenüberliegenden Seite des tellerartigen Abschlusselementes 43 ist ein weiteres Abschlusselement 44 vorgesehen, welches im vorliegenden Ausführungsbeispiel einstückig mit der Hülse 41 ausgebildet ist. Hülse 41 und Abschlusselement 44 bilden zusammen einen Hohlzylinder, der einen umlaufenden Bund oder Flansch aufweist, welcher durch das lochscheibenartige Abschlusselement 44 gebildet ist. Durch die Öffnung des lochscheibenartigen Aufnahmeelements 44 wird ein Zugang geschaffen, über den das Anbindungselement des Gebers oder Nehmers in die Buchse 42 einführbar ist.

Wie den Fig. 1 und 2 ferner zu entnehmen ist, weist die Anbindungsstelle 10 eine Auflage 13 sowie sich davon seitlich abhebende Führungen 14 auf, in der das anzubindende und hier nicht dargestellte Betätigungsglied, insbesondere eine Anschlusslasche eines anzubindenden Betätigungsgliedes, aufgenommen wird.

Zum Festlegen des Betätigungsgliedes an der Anbindungsstelle 10 ist es gemäß der Erfindung vorgesehen, dass die Anbindungsstelle 10 einen Gewindeeinsatz 11 aufweist. Im hier gezeigten Ausführungsbeispiel ist der Gewindeeinsatz 11 eine mehrkantige Stanzmutter 12, die im Querschnitt im Wesentlichen trapezförmig abgebildet ist. Ferner ist den Fig. 1 und 2 zu entnehmen, dass die Mutter 12 durch umspritzen in den vorliegend aus Kunststoff bestehenden Grundkörper 60 integriert ist. Denkbar ist auch, dass das Gewindeelement 11 in eine entsprechende Öffnung im Grundkörper 60 eingesetzt, eingeklipst, eingerastet oder eingeklebt ist. Die Mehrkantaußenkontur des Gewindeelementes bewirkt in vorteilhafter Weise eine Verdrehsicherung.

Um eine Längeneinstellung des anzubindenden, hier nicht dargestellten Betätigungsgliedes zu gewährleisten, kann es weiterhin vorgesehen sein, dass das Betätigungsglied, insbesondere im Bereich der Anschlusslasche, ein Langloch aufweist, wodurch eine stufenlose Einstellung und Vorfixierung der Anbindevorrichtung 1 am Betätigungsglied möglich ist.

Fig. 3 zeigt das erfindungsgemäße elastische Dämpfungselement 50, welches an seine dem äußeren Aufnahmeelement 30 zugewandten Außenwandungen 51 ein umlaufendes Wellenprofil 52 aufweist. Im hier gezeigten Ausführungsbeispiel ist das Wellenprofil periodisch, insbesondere aus alternierend halbkreisförmigen Fortsätzen 53 und Vertiefungen 54 gebildet. Durch Versuche hat sich herausgestellt, dass ein derartig ausgebildetes Dämpfungselement 50 deutlich verbesserte Dämpfungseigenschaften aufweist, was die Übertragung von Vibrationen vom Getriebe über das Betätigungsglied zum Wahlhebel eines Kraftfahrzeuges angeht. Die Dämpfungseigenschaften werden außerdem dadurch verbessert, dass das Dämpfungselement 50 - wie beim vorliegenden Ausführungsbeispiel - als separates Bauteil mit einem im Wesentlichen ringförmigen Querschnittsprofil ohne Materialunterbrechungen ausgeführt ist. Vorzugsweise besteht das Dämpfungselement 50 aus Gummi oder einem gummiartigen synthetischen Elastomer.

Wie insbesondere den Fig. 1 und 3 zu entnehmen ist, sind die stirnseitigen Berandungen 55, 56 des Dämpfungselementes 50 abgefasst, im vorliegenden Ausführungsbeispiel abgekantet. Hierdurch wird eine Einführung des Dämpfungselementes 50 zwischen das äußere ösenartige Aufnahmeelement 30 und das darin angeordnete innere Aufnahmeelement 40 erleichtert.

Um auch eine Dämpfung in Richtung aller drei Fahrzeugachsen, insbesondere auch der bzgl. des Fahrzeuges nach oben gerichteten Z-Achse bzw. der Fahrzeughochachse zu erhalten, können nach einem eigenständigen Aspekt der Erfindung an den Stirnseiten des Dämpfungselements Fortsätze oder profilierte Endabschnitte vorgesehen sein. Bspw. ist dazu an wenigstens einer Stirnfläche des Dämpfungselements ein umlaufender, ringförmiger Fortsatz angeordnet. Dabei hat es sich als vorteilhaft herausgestellt, wenn der Durchmesser des ringförmigen Fortsatzes größer als die Wandstärke des zylindrischen Teils des Dämpfungselementes (50) ist.

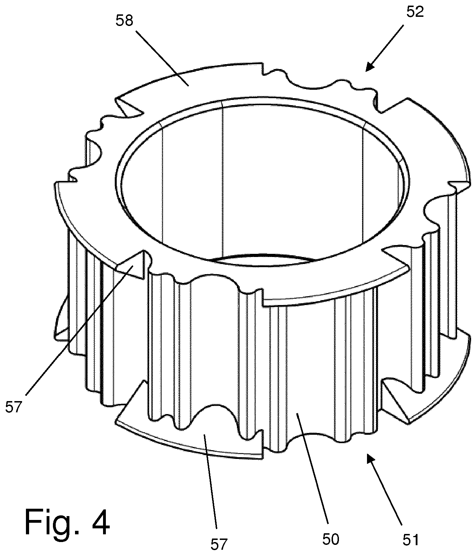

Fig. 4 zeigt eine weitere Ausführungsform des Dämpfungselements, das mit dem Bezugszeichen 50 versehen ist. An den Stirnseiten 58 sind Fortsätze 57 angeordnet, die über die Außenwand des Dämpfungselements 50 hinausragen und von der Außenwand 51 zur Stirnseite 58 hin sich verjüngend zulaufen. Mit den Fortsätzen 57 wird eine Dämpfung in Richtung der - in Figur 4 nicht gezeigten - Fahrzeug Z-Achse erreicht. Die Fortsätze 57 sind an den gegenüberliegenden Stirnseiten 58 versetzt angeordnet, hierdurch lässt sich das Dämpfungselement kostengünstig herstellen, da eine einfache Entformung bei der Herstellung mittels eines Werkzeuges möglich ist.

Eine weitere Ausgestaltung für eine Dämpfung in Richtung der - in Figur 4 nicht gezeigten - Fahrzeug Z-Achse besteht darin, an dem umlaufenden Bund der in Figur 4 nicht gezeigten Hülse 41 oder an der dem Dämpfungselement zugewandten Seite des in Figur 4 nicht gezeigten Abschlusselements 43 eine Weichkomponente anzuordnen.

Die Herstellung einer derart gestalteten Hülse oder eines Abschlusselements ist aus dem Stand der Technik bekannt und erfolgt z.B. als 2K-Bauteil. Dies bedeutet, dass die Weichkomponente in einer Spritzgussform an die vorgesehenen Flächen der Hülse 41 oder des Abschlusselements 43 angespritzt wird.
Die Weichkomponente kann dabei als Noppe oder Keil oder Steg ausgebildet sein, die umlaufend an dem Bund der Hülse 41 oder an der dem Dämpfungselement 50 zugewandten Seite des Abschlusselements 43 angeordnet sind. Dabei kann die Anzahl der Noppen oder Keile oder Stege variieren.

Demgegenüber sind der Grundkörper 60 sowie die Buchse 42, die Hülse 41 und die Abschlusselemente 43, 44 vorzugsweise aus Kunststoff, beispielsweise aus Polyamid gefertigt, die gegebenenfalls glaserverstärkt sind und/oder Polytetrafluorethylen (PTFE)-Bestandteil aufweisen. Die Verwendung solcher Kunststoffe ist hinsichtlich einer Gewichtseinsparung als auch unter fertigungstechnischen Gesichtspunkten von besonderem Vorteil.

### Bezugszeichenliste

- 1: Anbindevorrichtung
- 10: Anbindungsstelle
- 11: Gewindeeinsatz
- 12: Mutter
- 13: Auflage
- 14: Führung
- 20: Aufnahme
- 30: äußeres Aufnahmeelement
- 40: inneres Aufnahmeelement
- 41: Hülse
- 42: Buchse
- 43: Abschlusselement
- 44: Abschlusselement
- 45: Nut
- 50: Dämpfungselement
- 51: Außenwandung des Dämpfungselementes
- 52: Wellenprofil
- 53: Fortsatz
- 54: Vertiefung
- 55: Berandung
- 56: Berandung
- 57: Fortsatz
- 58: Stirnseite
- 60: Grundkörper

## Patentansprüche

1. Vorrichtung (1) zum lösbaren Anbinden eines Betätigungsgliedes an einen Geber oder Nehmer, beispielsweise an einen Schalthebel oder ein Getriebe eines Kraftfahrzeuges, mit einer Anbindungsstelle (10) zum Festlegen des Betätigungsgliedes und einer Aufnahme (20) zum Festlegen eines Anbindungselements des Gebers oder Nehmers, wobei die Aufnahme (20) ein im Wesentlichen ösenartiges äußeres Aufnahmeelement (30) sowie ein darin angeordnetes inneres Aufnahmeelement (40) aufweist, zwischen denen ein elastisches Dämpfungselement (50) angeordnet ist, **dadurch gekennzeichnet, dass** das Dämpfungselement (50) als separates Bauteil ausgebildet ist und an seiner dem äußeren oder inneren Aufnahmeelement (30) zugewandten Wandung (51) ein periodisch und/oder alternierend ausgebildetes Profil in Form eines Wellenprofils (52) und die Anbindungsstelle (10) ein Gewindeeinsatz (11) zum Festlegen des Betätigungsgliedes aufweisen.

2. Vorrichtung (1) nach Anspruch 1, **dadurch gekennzeichnet, dass** das Profil, insbesondere Wellenprofil (52) periodisch ausgebildet und/oder aus alternierend teilkreisförmigen, insbesondere halbkreisförmigen, Fortsätzen (53) und Vertiefungen (54) gebildet ist.

3. Vorrichtung (1) nach Anspruch 1 oder 2, **dadurch gekennzeichnet, dass** wenigstens eine Berandung (55, 56) des Dämpfungselements (50) abgefast, insbesondere abgekantet oder abgerundet, ist.

4. Vorrichtung (1) nach einem der vorhergehenden Ansprüche, **dadurch gekennzeichnet, dass** das äußere Aufnahmeelement (30) und die Anbindungsstelle (10) einstückig, insbesondere als ein gemeinsamer Grundkörper (60), ausgebildet sind.

5. Vorrichtung (1) nach einem der vorhergehenden Ansprüche, **dadurch gekennzeichnet, dass** das äußere Aufnahmeelement (30), das innere Aufnahmeelement (40) und/oder das Dämpfungselement (50) im Wesentlichen ringförmig und/oder hohlzylinderförmig ausgebildet sind.

6. Vorrichtung (1) nach einem der vorhergehenden Ansprüche, **dadurch gekennzeichnet, dass** das innere Aufnahmeelement (40) eine Buchse (42) aufweist, in der das Anbindungselement des Gebers oder Nehmers, insbesondere mittels einer Rast- und/oder Klipsverbindung, festlegbar ist.

7. Vorrichtung (1) nach Anspruch 6, **dadurch gekennzeichnet, dass** die Buchse (42) als Gelenkpfanne eines Kugelgelenks ausgebildet ist, in der ein einen Kugelkopf aufweisendes Anbindungselement des Gebers oder Nehmers festlegbar, insbesondere einrastbar oder einklipsbar, ist.

8. Vorrichtung (1) nach Anspruch 6 oder 7, **dadurch gekennzeichnet, dass** das innere Aufnahmeelement (40) eine vorzugsweise zylinderförmige Hülse (41) aufweist, in der die Buchse (42) angeordnet ist.

9. Vorrichtung (1) nach Anspruch 8, **dadurch gekennzeichnet, dass** die Hülse (41) eine Durchgangsverjüngung aufweist, mittels derer die vorzugsweise sich korrespondierend verjüngende Buchse (42) in Montagestellung in wenigstens einer axialen Richtung innerhalb der Hülse (41) festgelegt ist.

10. Vorrichtung (1) nach einem der vorhergehenden Ansprüche, **dadurch gekennzeichnet, dass** das innere Aufnahmeelement (40) in axialer Richtung bezüglich des ösenartigen äußeren Aufnahmeelementes (40) jeweils endseitig ein Abschlusselement (43, 44) aufweist, mittels derer das innere Aufnahmeelement (40), insbesondere die Hülse (41) und/oder die Buchse (42), in axialer Richtung am äußeren Aufnahmeelement (30) festgelegt ist.

11. Vorrichtung (1) nach Anspruch 10, **dadurch gekennzeichnet, dass** die Buchse (42) und wenigstens eines der beiden Abschlusselemente (43, 44) einstückig, insbesondere als Hohlzylinder mit einem einenends umlaufendem Bund oder Flansch, ausgebildet ist.

12. Vorrichtung (1) nach Anspruch 10 oder 11, **dadurch gekennzeichnet, dass** wenigstens eines der beiden Abschlusselemente (43, 44) deckel- oder teller-oder lochscheibenartig ausgebildet ist.

13. Vorrichtung (1) nach einem der Ansprüche 10 bis 12, **dadurch gekennzeichnet, dass** wenigstens eines der beiden Abschlusselemente (43, 44) eine umlaufende Nut (45) aufweist, in welche die Hülse (41) in Montagestellung eingreift.

14. Vorrichtung (1) nach einem der vorhergehenden Ansprüche, **dadurch gekennzeichnet, dass** der Gewindeeinsatz (11) eine Mutter (12), insbesondere eine Mehrkantmutter, ist.

15. Vorrichtung nach einem der vorhergehenden Ansprüche 1 bis 14, **dadurch gekennzeichnet, dass** die Achse des Gewindeeinsatzes (11) orthogonal zur Achse der Aufnahme (20) angeordnet ist.

16. Vorrichtung (1) nach einem der vorhergehenden Ansprüche, **dadurch gekennzeichnet, dass** der Gewindeeinsatz (11) in die Anbindestelle (10), insbesondere in den Grundkörper (60), durch Umspritzen integriert ist.

17. Vorrichtung (1) nach einem der vorhergehenden Ansprüche, **dadurch gekennzeichnet, dass** die Anbindungsstelle (10) eine Auflage (13) und/oder eine Führung (14) für das anzubindende Betätigungsglied, insbesondere für eine Anschlusslasche eines anzubindenden Betätigungsgliedes, aufweist.

18. Betätigungsglied mit wenigstens einer einenends, vorzugsweise im Bereich einer Anschlusslasche, angeordneten Vorrichtung (1) nach einem der vorhergehenden Ansprüche.

19. Betätigungsglied nach Anspruch 18, **dadurch gekennzeichnet, dass** wenigstens einenends, vorzugsweise im Bereich einer Anschlusslasche, ein Loch, insbesondere ein Langloch, vorgesehen ist, durch das zum Festlegen des Betätigungsgliedes an der Vorrichtung (1) eine Schraube in das Gewindeelement (11) eindrehbar ist.

20. Vorrichtung nach einem der vorhergehenden Ansprüche 1 bis 19, **dadurch gekennzeichnet, dass** an wenigstens einer Stirnfläche des Dämpfungselements (50) ein umlaufender, ringförmiger Fortsatz angeordnet ist.

## Claims

1. Device (1) for releasably linking an actuating member to a transducer or receiver, for example to a switch lever or a gear box of a motor vehicle, with a linking site (10) for fixedly attaching the actuating member, and a reception area (20) for fixedly attaching a linking element of the transducer or the receiver, wherein the reception area (20) has a substantially loop-like outer reception element (30) as well as an inner reception element (40) that is arranged therein, between which an elastic damping element (50) is arranged, **characterized in that** the damping element (50) is embodied as a separate structural component and at its wall (51) that is facing the outer or the inner reception element (30, 40) has a periodically and/or alternatingly embodied profile in the form of a wave profile (52), and the linking site (10) has an thread insert (11) for fixedly attaching the actuating member.

2. Device (1) according to claim 1, **characterized in that** the profile, in particular the wave profile (52), is embodied in a periodic manner and/or is formed of alternating extensions (53) and indentations (54) that have the shape of a partial circle, in particular of a semicircle.

3. Device (1) according to claim 1 or 2,
**characterized in that** at least one boundary (55, 56) of the damping element (50) is chamfered, in particular beveled or rounded.

4. Device (1) according to one of the preceding claims, **characterized in that** the outer reception element (30) and the linking site (10) are embodied in one piece, in particular as a common base body (60).

5. Device (1) according to one of the preceding claims, **characterized in that** the outer reception element (30), the inner reception element (40) and/or the damping element (50) are embodied substantially in the shape of a ring and/or a hollow cylinder.

6. Device (1) according to one of the preceding claims, **characterized in that** the inner reception element (40) has a bushing (42) inside of which the linking element of the transducer or the receiver can be fixedly attached, in particular by means of a snap-in and/or clip connection.

7. Device (1) according to claim 6, **characterized in that** the bushing (42) is embodied as a socket of a ball joint, inside of which a linking element of the transducer or the receiver having a spherical head can be fixedly attached, in particular snapped in or clipped in.

8. Device (1) according to claim 6 or 7,
**characterized in that** the inner reception element (40) has a preferably cylindrical sleeve (41) inside of which the bushing (42) is arranged.

9. Device (1) according to claim 8, **characterized in that** the sleeve (41) has a passage tapering by means of which the bushing (42), which is preferably correspondingly tapered, is fixedly attached inside the sleeve (41) in the mounting position in at least one axial direction.

10. Device (1) according to any of the preceding claims, **characterized in that** the inner reception element (40) respectively has an end element (43, 44) at the end side in the axial direction with respect to the lop-like outer reception element (30), by means of which the inner reception element (40), in particular the sleeve (41) and/or the bushing (42), is fixedly attached at the outer reception element (30) in the axial direction.

11. Device (1) according to claim 10, **characterized in that** the bushing (42) and at least one of the two end elements (43, 44) is embodied in one piece, in particular as a hollow cylinder with a collar or flange extending circumferentially at one end.

12. Device (1) according to claim 10 or 11,
**characterized in that** at least one of the two end elements (43, 44) is embodied in the manner of a lid or a plate or a perforated disc.

13. Device (1) according to any of the claims 10 to 12, **characterized in that** at least one of the two end elements (43, 44) has a circumferential grove (45) with which the sleeve (41) meshes in the mounting position.

14. Device (1) according to any of the preceding claims, **characterized in that** the thread insert (11) is a nut (12), in particular a polygonal nut.

15. Device according to any of the preceding claims 1 to 14, **characterized in that** the axis of the thread insert (11) is arranged orthogonally with respect to the axis of the reception area (20).

16. Device (1) according to any of the preceding claims, **characterized in that** the thread insert (11) is integrated in the linking site (10), in particular in the base body (60), by means of overmolding.

17. Device (1) according to any of the preceding claims, **characterized in that** the linking site (10) has a support (13) and/or a guide (14) for the actuating member to be linked, in particular for a connection lug of an actuating member to be linked.

18. Actuating member with at least one device (1) according to any of the preceding claims that is arranged at one end, preferably in the area of a connection lug.

19. Actuating member according to claim 18,
**characterized in that**
at least at one end, preferably in the area of a connection lug, a hole, in particular an oblong hole, is provided, through which a screw can be screwed into the threaded element (11) for fixedly attaching the actuating member at the device (1).

20. Device according to one of the preceding claims 1 to 19, **characterized in that** a circumferential, ringshaped extension is arranged at least at one front surface of the damping element (50).

## Revendications

1. Dispositif (1) pour l'attachement détachable d' un organe d'actionnement à un émetteur ou à un récepteur, par exemple à un levier de changement de rapport de transmission ou à la transmission d'un véhicule automobile, le dispositif présentant
un emplacement de liaison (10) qui fixe l'organe d'actionnement et un logement (20) qui fixe un élément de liaison de l'émetteur ou du récepteur,
le logement (20) présentant un élément extérieur de réception (30) essentiellement en forme d'oeillet dans lequel est disposé un élément intérieur de réception (40), un élément élastique d'amortissement (50) étant disposé entre les deux éléments de réception,
**caractérisé en ce que**
l'élément d'amortissement (50) est configuré comme composant distinct et présente sur sa paroi (51) tournée vers son élément extérieur ou son élément intérieur (30, 40) de réception un profil périodique et/ou alterné présentant la forme d'un profil ondulé (52) et
**en ce que** l'emplacement de liaison (10) présente un insert fileté (11) qui fixe l'organe d'actionnement.

2. Dispositif (1) selon la revendication 1,
**caractérisé en ce que** le profil, en particulier le profil ondulé (52), est formé périodique et/ou est formé d'une alternance d'appendices (53) et de creux (54) en forme de segment de cercle et en particulier en forme de demi-cercle.

3. Dispositif (1) selon les revendications 1 ou 2,
**caractérisé en ce qu'**au moins une bordure (55, 56) de l'élément d'amortissement (50) est chanfreinée, en particulier en arête coupée ou arrondie.

4. Dispositif (1) selon l'une des revendications précédentes, **caractérisé en ce que** l'élément extérieur de réception (30) et l'emplacement de liaison (10) sont configurés d'un seul tenant, en particulier comme corps de base commun (60).

5. Dispositif (1) selon l'une des revendications précédentes, **caractérisé en ce que** l'élément extérieur de réception (30), l'élément intérieur de réception (40) et/ou l'élément d'amortissement (50) ont une configuration essentiellement annulaire et/ou en cylindre creux.

6. Dispositif (1)selon l'une des revendications précédentes, **caractérisé en ce que** l'élément intérieur de réception (40) présente une douille (42) dans laquelle l'élément de liaison de l'émetteur ou du récepteur peut être fixé, en particulier au moyen d'une liaison encliquetée et/ou à clips.

7. Dispositif (1) selon la revendication 6,
**caractérisé en ce que** la douille (42) est configurée comme cuvette d'une articulation sphérique dans laquelle un élément de liaison de l'émetteur et du récepteur qui présente une tête sphérique peut être fixé, en particulier par encliquetage ou en clipsage.

8. Dispositif (1) selon les revendications 6 ou 7,
**caractérisé en ce que** l'élément intérieur de réception (40) présente un manchon (41) de préférence cylindrique dans lequel est disposée la douille (42).

9. Dispositif (1) selon la revendication 8,
**caractérisé en ce que** le manchon (41) présente un rétrécissement de sa passage au moyen duquel la douille (42) qui se rétrécit de préférence de manière correspondante est immobilisée en position de montage à l'intérieur du manchon (41) dans au moins une direction axiale.

10. Dispositif (1) selon l'une des revendications précédentes, **caractérisé en ce que** dans la direction axiale, l'élément intérieur de réception (30) présente à chaque extrémité de l'élément extérieur de réception (40) en forme d'oeillet un élément de fermeture (43, 44) au moyen duquel l'élément intérieur de réception (40), en particulier le manchon (41) et/ou la douille (42), sont immobilisés dans la direction axiale sur l'élément extérieur de réception (30).

11. Dispositif (1) selon la revendication 10,
**caractérisé en ce que** la douille (42) et au moins l'un des deux éléments de fermeture (43, 44) sont formés d'un seul tenant, en particulier comme cylindre creux présentant un collet ou une bride périphérique à une extrémité.

12. Dispositif (1) selon les revendications 10 ou 11,
**caractérisé en ce qu'**au moins l'un des deux éléments de fermeture (43, 44) est configuré en forme de couvercle, de plateau ou de disque perforé.

13. Dispositif (1) selon l'une des revendications 10 à 12, **caractérisé en ce qu'**au moins l'un des deux éléments de fermeture (43, 44) présente une rainure périphérique (45) dans laquelle le manchon (41) s'engage en position de montage.

14. Dispositif (1) selon l'une des revendications précédentes, **caractérisé en ce que** l'insert fileté (11) est un écrou (12) et en particulier un écrou polygonal.

15. Dispositif (1) selon l'une des revendications précédentes 1 à 14, **caractérisé en ce que** l'axe de l' insert fileté (11) est disposé à la perpendiculaire de l'axe du logement (20).

16. Dispositif (1) selon l'une des revendications précédentes, **caractérisé en ce que** l' insert fileté (11) est intégré par englobement dans l'emplacement de liaison (10) et en particulier dans le corps de base (60) .

17. Dispositif (1) selon l'une des revendications précédentes, **caractérisé en ce que** l'emplacement de liaison (10) présente un appui (13) et/ou un guide (14) pour l'organe d'actionnement à relier, en particulier pour une patte de raccordement dans l'organe d'actionnement à relier.

18. Organe d'actionnement présentant au moins un dispositif (1) disposé à une extrémité, de préférence au niveau d'une patte de raccordement, selon l'une des revendications précédentes.

19. Organe d'actionnement selon la revendication 18,
**caractérisé en ce qu'**à au moins une extrémité, de préférence au niveau d'une patte de raccordement, un tourillon en particulier un trou oblong est prévu par lequel une vis peut être vissée dans l'insert fileté (11) pour immobiliser l'organe d'actionnement sur le dispositif (1).

20. Dispositif (1) selon l'une des revendications 1 à 19 qui précèdent, **caractérisé en ce qu'**un appendice périphérique annulaire est disposé sur au moins une surface frontale de l'élément d'amortissement (50).
